# EUROPEAN PATENT SPECIFICATION

(11) **EP 1 201 472 B1**
(45) Date of publication and mention of the grant of the patent: **19.07.2006**
(21) Application number: 01308747.3
(22) Date of filing: 15.10.2001
(51) Int. Cl.: B60J 1/17

(54) **Assembly**
Anordnung
Ensemble

(30) Priority: 26.10.2000 GB 0026148
(43) Date of publication of application: 02.05.2002
(73) Proprietor: ArvinMeritor Light Vehicle Systems-France, 45600 Sully sur Loire (FR)
(72) Inventor: Lawrie, Mark Graham, 45600 Lion en Sulias (FR); Le Gallo, Yann, 4510 Orleans (FR); De Vries, Pascal, 45640 Sandillion (FR); Blume, Klaus, 64569 Nauheim (DE); Hopson, Charles, Lebanon, TN 37087 (US); Laurandel, Herve, 14200 Herouville, St. Claire (FR); Dobson, Simon, Sandgate, Kent, CT20 3TA (GB); Cabanne, Damien, Fontainebleau (FR)
(74) Representative: Jones, John Bryn

(56) References cited:
- US-A- 4 905 413
- PATENT ABSTRACTS OF JAPAN vol. 1997, no. 06, 30 June 1997 (1997-06-30) -& JP 09 049369 A (SHIROKI CORP), 18 February 1997 (1997-02-18)
- PATENT ABSTRACTS OF JAPAN vol. 018, no. 508 (M-1678), 26 September 1994 (1994-09-26) -& JP 06 173529 A (NIPPON CABLE SYST INC), 21 June 1994 (1994-06-21)
- PATENT ABSTRACTS OF JAPAN vol. 2000, no. 12, 3 January 2001 (2001-01-03) -& JP 2000 248831 A (FUJI KIKO CO LTD), 12 September 2000 (2000-09-12)
- PATENT ABSTRACTS OF JAPAN vol. 2000, no. 12, 3 January 2001 (2001-01-03) -& JP 2000 265743 A (ASMO CO LTD), 26 September 2000 (2000-09-26)
- PATENT ABSTRACTS OF JAPAN vol. 2000, no. 01, 31 January 2000 (2000-01-31) -& JP 11 286215 A (ASMO CO LTD), 19 October 1999 (1999-10-19)
- PATENT ABSTRACTS OF JAPAN vol. 1999, no. 11, 30 September 1999 (1999-09-30) -& JP 11 159244 A (FUJI HEAVY IND LTD), 15 June 1999 (1999-06-15)

## Description

The present invention relates to door panel assemblies of land vehicles such as cars (automobiles).

Known cars include doors having windows. It is possible to lower and raise a window glass in order to open and close the window. The vertical position of the window glass is controlled by a window regulator, parts of which are generally secured to a lower edge of the window glass.

Several different forms of window regulator are known.

The window glass and the window regulator are positioned in a cavity within the door and are attached to one side (the 'wet' side) of a door panel. The window regulator is driven by components within a window regulator housing mounted on the wet side of the door panel.

A drive mechanism is attached to the other side (the 'dry' side) of the panel opposite to, and in driving co-operation with components of the window regulator housing. The drive mechanism can comprise a manual arrangement or a powered motor arrangement.

Such an arrangement is shown in JP11-286215 wherein nuts and bolts are used to secure the window regulator and drive mechanism onto the door panel.

A problem with known door panel assemblies is to ensure alignment of the window regulator housing with the drive mechanism.

An object of the present invention is to provide an improved form of aligning a first, second and third component of an assembly. The invention is particularly applicable to aligning a window regulator housing (a second component) with a drive mechanism (a third component) when these two components are formed as an assembly with a door panel (a first component). It should be noted that the invention is however applicable to other assemblies were alignment of components is required.

A further object of the present invention is to provide an improved method of assembling a first, second and third component. A further object of the present invention is to provide an improved form of partially disassembling a first, second and third component of an assembly.

Thus according to the present invention there is provided an assembly as defined in claim 1, and corresponding method claims 15 and 16.

The invention will now be described, by way of example only, with reference to the accompanying drawing in which:-
Figure 1 is a schematic view of an assembly according to the present invention, and
Figure 2 shows the locating means of figure 1, and
Figures 3 and 3A show an alternative form of assembly according to the present invention.

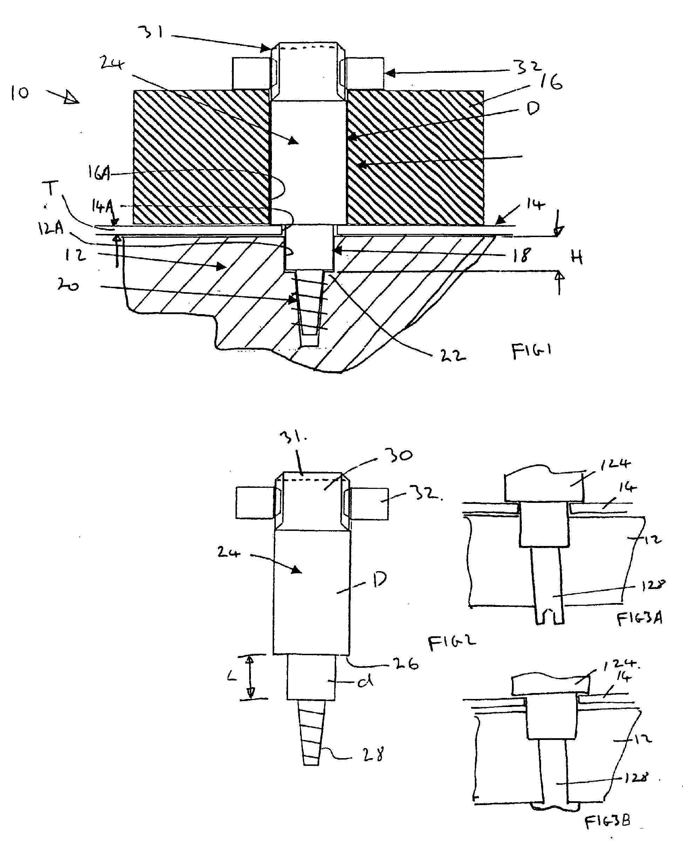

With reference to figures 1 and 2 there is shown a door panel assembly 10 including a window regulator housing 12 (a second component), a door panel 14 (a first component) and a drive mechanism in the form of a window regulator motor 16 (a third component).

In further embodiments the drive mechanism could be in the form of a manual window winder.

Door panel 14 can be in the form of a door inner skin i.e. a pressed component having various holes and attachment features for components such as door hinges, door latch, audio speaker, window regulator motors etc.

Alternatively door panel 14 can be in the form of a door module panel i.e. a panel onto which is pre mounted various components such as a window regulator motor, an audio speaker, a door latch etc, with this pre assembled door module being mounted in a relatively large aperture of a door inner skin.

Window regulator housing 12 might typically contain a drum around which has been wound a cable, rotation of the drum causing movement of the cable and hence raising and lowering of the window glass via separate components of the window regulator.

Note that the present invention is not restricted to window regulators containing drums with cables.

In particular is should be noted that the arrangement shown in figure 1 enables power generated by the window regulator motor 16 to be transferred across the door panel to the window regulator to enable raising and lowering of the window.

Window regulator motor 16 includes a through hole 16A and door panel 14 includes a through hole 14A.

Window regulator housing 12 includes a blind hole 12A having a parallel sided portion 18 and a tapered portion 20. The large diameter end of the tapered portion is smaller in diameter than the diameter of the parallel sided portion thus providing a shoulder 22 in hole 12A.

In further embodiments Blind hole 12A could include a parallel sided portion in place of tapered portion 20, preferably being of smaller diameter than portion 18.

The assembly also includes a locating means 24 having a large diameter portion D and small diameter portion d which are concentric relative to each other. A shoulder 26 is provided between the large and small diameter portions. At the end of the small diameter portion remote from shoulder 26 is a tapered threaded portion 28.

At the end of the large diameter portion is a paralleled sided threaded portion 30 onto which can be screwed nut 32.

It should be noted that the large and small diameter portions are designed to be concentric relative to each other. However, manufacturing techniques result in slight eccentricities of the large diameter portion relative to the small diameter portion. However, the design of the large and small diameter portions means that manufacturing techniques, such as turning allow the eccentricities of the large and small diameter portions be minimised. Note that manufacture of the locating means is not limited to making this component as a turned component.

At the end of the threaded portion 30 remote from shoulder 26 is a slot 31.

The assembly 10 can be assembled in two distinct manners.

Firstly, the window regulator housing 12 can be aligned relative to the door panel and the locating means 24 (absent the nut 32) can be inserted through hole 14A and into hole 12A. The locating means 24 can then be rotated by means of a screwdriver engaging slot 31 such that the tapered threaded portion 28 engages with the tapered portion 20 of hole 12A. In this case the tapered portion 20 is initially plain sided i.e. it does not include threads and as the locating means is screwed into the hole 12A the tapered threaded portion 28 self taps a thread into the material of window regulator housing 12. In particular the material of window regulator housing 12 can be a plastics material. Such an arrangement provides for a subassembly comprising the locating means 24 which secures the door panel 14 to the window regulator housing 12.

It should be noted that the length L of the small diameter portion can be slightly less than or slightly greater than the height H of the parallel sided portion 18 plus the thickness T of the door panel 14.

The former case provides for a sub assembly in which the door panel 14 is clamped to the window regulator housing 12 and the latter case provides for an arrangement whereby the shoulder 26 abuts shoulder 22 and the door panel 14 is not clamped relative to the window regulator housing 12.

The window regulator motor can then be assembled onto the large diameter portion and the nut 16 can be threaded onto the threaded portion 30 and tightened to provide the complete assembly.

The second way of assembling the components is to be pre assemble the nut 32 onto the locating means 24, align the window regulator housing 12, door panel 14 and window regulator motor 16, and to sequentially insert the locating means 24 through the holes 16A, 14A and 12A and tighten via slot 32 to secure the assembly in one operation.

Using the latter method is particularly useful when initially assembling the assembly.

The former method is particularly useful when the window regulator motor 16 requires removal or replacement whereupon the nut 32 can be removed and the window regulator motor 16 also removed and a replacement window regulator motor can then be assembled without having to move the locating means from holes 14A and 12A. Thus it is not required to disturb the connection between the door panel 14 and the window regulator housing 12.

In particular it should be noted from figure 1 that the small diameter portion d is a relatively snug fit within parallel sided portion 18 and also that the large diameter portion D is a relatively snug fit within hole 16A. Thus by controlling the dimensions and manufacturing tolerances on the large and small diameter portions and also on the holes 16A and parallel sided portion 18 it is possible to align the window regulator housing 12 with the window regulator motor 16 relatively accurately. In particular it is often necessary to align these two components relative to each other more accurately than they are aligned relative to the door panel 14, and it will be noted from figure 1 that hole 14A is of significantly larger diameter than hole 12A. Thus under certain installations the dimensional accuracy of hole 14A can be relaxed thereby providing a cheaper assembly.

The assembly of the window regulator motor, door panel and window regulator housing as described above includes a single locating means 24. However, preferably a plurality of locating means 24 can be assembled into appropriate holes to provide the assembly. Preferably two or three locating means 24 are used. Where a plurality of locating means are used at spaced part locations, then these locating means ensure that the first, second and third components cannot move relative to each other.

However, it should be noted that where only a single locating means 24 is used then further devices such as tabs, pips, recesses, pins etc can be used to ensure the first, second and third components are fixed relative to each other, in particular to ensure that none of the first, second or third components can be rotated about the axis of the fixing means 24.

Whilst the locating means 24 has been provided with a drive formation in the form of a slot 31, alternatively drive formations such as hexagonal recesses, hexagonal projections, Torx formations or other suitable drive formations can be provided.

With reference to figures 3A and 3B there is shown an alternative form of assembly according to the present invention in which the tapered threaded portion 28 of figure 2 has been replaced with a rivet 128 which is integral with the locating means 124. Figure 3A shows the rivet having just been inserted through door panel 14 and window regulator housing 12, and figure 3B shows the rivet having been peened over such that door panel 14, window regulator motor 16 and locating means 124 are retained as a sub assembly.

Furthermore it is possible to seal the assembly e.g. by providing a seal between the window regulator housing 12 and the door panel 14 or alternatively by providing a seal between the window regulator motor 16 and the door panel 14.

In further embodiments it is also possible to provide spring washers or other pre-load devices, in particular between the nut 32 and the window regulator motor 16.

Whilst it is possible to provide an assembly according to the present invention comprising components other than door panels, window regulator mechanisms and window regulator motors, the invention is particularly applicable to the automotive industry and in particular the first component can be a body pressing panel or other sheet metal component of a car.

## Claims

1. An assembly (10) including a door panel (14) having a first hole (14A), a window regulator mechanism (12) having a second hole (12A) and a drive mechanism (16) having a third hole (16A), the assembly further including a locating means (24) assembled into the first, second and third holes, **characterised in that** the locating means having at least a small diameter cylindrical portion (d) which is concentric relative to a large diameter cylindrical portion (D) to provide a shoulder (26), the locating means further including a fixing portion (28, 128) proximate the small diameter portion for securing the window regulator mechanism relative to the assembly and a fixing portion (30) proximate the large diameter portion for securing the drive mechanism relative to the assembly, in which the small diameter cylindrical portion (d) is located in the second hole (12A) in order to align the locating means (24) relative to the window regulator mechanism (12), and the large diameter portion (D) is located in the third hole (16A) in order to align the locating means relative to the drive mechanism, thereby aligning the window regulator mechanism (12) relative to the drive mechanism (16), in which the door panel (14) is situated between the window regulator mechanism (12) and drive mechanism (16) and also between the shoulder (26) and the window regulator mechanism (12).

2. An assembly as defined in claim 1 in which at least one of the fixing portions (28, 30) is in the form of a threaded portion.

3. An assembly as defined in claim 2 in which the threaded portion (28) engages the window regulator mechanism or the drive mechanism.

4. An assembly as defined in claim 2 in which the threaded portion (30) engages a nut (32).

5. An assembly as defined in claims 2 to 4 in which the threaded portion (30) is parallel sided.

6. An assembly as defined in claims 2 to 4 in which the threaded portion (28) is tapered.

7. An assembly as defined in any preceding claim in which the locating means (24) includes a driving feature (31).

8. An assembly as defined in any preceding claim in which at least one of the fixing portions (128) is in the form of a rivet.

9. An assembly as defined in any preceding claim in which the door panel (14) locates on the small diameter portion (d).

10. An assembly as defined in any preceding claim in which at least one of the second (12A) and third holes (16A) is a through hole (16A) or a blind hole(12A).

11. An assembly as defined in any preceding claim in which the door panel (14) is sealed relative to the window regulator mechanism (12) and/or the door panel (14) is sealed relative to the drive mechanism (16).

12. An assembly as defined in any preceding claim in which the drive mechanism (16) is a window regulator motor.

13. An assembly as defined in any preceding claim in which the door panel (14), window regulator mechanism (12) and drive mechanism (16) are fixed relative to each other.

14. An assembly as defined in claim 13 further including a further locating means which, in conjunction with said locating means (24), fixes the door panel (14), window regulator mechanism (12) and drive mechanism (16) relative to each other.

15. A method of assembling an assembly (10) as defined in any preceding claim including the steps of assembling the door panel (14) and window regulator mechanism (12) to form a sub assembly and subsequently assembling the drive mechanism (16) to form the completed assembly (10).

16. A method of assembling an assembly (10) as defined in claims 1 to 14 including the sequential steps of inserting the locating means (24) into one of the second (12A) or third (16A) holes, inserting the locating means (24) into the first hole (14A), inserting the locating means (24) into the other of the second (12A) and third (16A) holes to provide the completed assembly (10).

17. A method of assembling an assembly (10) as defined in claim 16 including the step of pre-aligning at least two of the holes prior to inserting the locating means (24).

## Patentansprüche

1. Baugruppe (10), die ein Türpaneel (14) mit einem ersten Loch (14A), einen Fensterhebermechanismus (12) mit einem zweiten Loch (12A) und einen Antriebsmechanismus (16) mit einem dritten Loch (16A) umfasst, wobei die Baugruppe ferner eine Positioniereinrichtung (24) umfasst, die in das erste, zweite und dritte Loch eingebaut ist, **dadurch gekennzeichnet, dass** die Positioniereinrichtung mindestens einen zylindrischen Abschnitt (d) mit kleinem Durchmesser aufweist, der zu einem zylindrischen Abschnitt (D) mit großem Durchmesser konzentrisch ist, um eine Schulter (26) bereitzustellen, wobei die Positioniereinrichtung ferner einen Befestigungsabschnitt (28, 128) in der Nähe des Abschnitts mit kleinem Durchmesser aufweist, um den Fensterhebermechanismus relativ zu der Baugruppe zu befestigen, und einen Befestigungsabschnitt (30) in der Nähe des Abschnitts mit großem Durchmesser, um den Antriebsmechanismus relativ zu der Baugruppe zu befestigen, bei der sich der zylindrische Abschnitt (d) mit kleinem Durchmesser in dem zweiten Loch (12A) befindet, um die Positioniereinrichtung (24) relativ zu dem Fensterhebermechanismus (12) auszurichten, und der Abschnitt (D) mit großem Durchmesser sich in dem dritten Loch (16A) befindet, um die Positioniereinrichtung relativ zu dem Antriebsmechanismus auszurichten, wodurch der Fensterhebermechanismus (12) relativ zu dem Antriebsmechanisms (16) ausgerichtet wird, wobei sich das Türpaneel (14) zwischen dem Fensterhebermechanismus (12) und dem Antriebsmechanismus (16) und auch zwischen der Schulter (26) und dem Fensterhebermechanismus (12) befindet.

2. Baugruppe nach Anspruch 1, bei der mindestens einer der Befestigungsabschnitte (28, 30) die Form eines Gewindeabschnitts hat.

3. Baugruppe nach Anspruch 2, bei der der Gewindeabschnitt (28) an dem Fensterhebermechanismus oder dem Antriebsmechanismus angreift.

4. Baugruppe nach Anspruch 2, bei der der Gewindeabschnitt (30) an einer Mutter (32) angreift.

5. Baugruppe nach den Ansprüchen 2 bis 4, bei der der Gewindeabschnitt (30) parallele Seiten hat.

6. Baugruppe nach den Ansprüchen 2 bis 4, bei der der Gewindeabschnitt (28) verjüngt ist.

7. Baugruppe nach einem der vorhergehenden Ansprüche, bei der die Positioniereinrichtung (24) ein Antriebsmittel (31) aufweist.

8. Baugruppe nach einem der vorhergehenden Ansprüche, bei der mindestens einer der Befestigungsabschnitte (128) die Form eines Niets hat.

9. Baugruppe nach einem der vorhergehenden Ansprüche, bei der das Türpaneel (14) auf dem Abschnitt (d) mit kleinem Durchmesser liegt.

10. Baugruppe nach einem der vorhergehenden Ansprüche, bei der mindestens das zweite Loch (12A) oder das dritte Loch (16A) ein Durchgangsloch (16A) oder ein Sackloch (12A) ist.

11. Baugruppe nach einem der vorhergehenden Ansprüche, bei der das Türpaneel (14) gegenüber dem Fensterhebermechanismus (12) abgedichtet ist und/oder das Türpaneel (14) gegenüber dem Antriebsmechanismus (16) abgedichtet ist.

12. Baugruppe nach einem der vorhergehenden Ansprüche, bei der der Antriebsmechanismus (16) ein Fensterhebermotor ist.

13. Baugruppe nach einem der vorhergehenden Ansprüche, bei der das Türpaneel (14), der Fensterhebermechanismus (12) und der Antriebsmechanismus (16) aneinander befestigt sind.

14. Baugruppe nach Anspruch 13, die ferner eine weitere Positioniereinrichtung umfasst, die in Verbindung mit der Positioniereinrichtung (24) das Türpaneel (14), den Fensterhebermechanismus (12) und den Antriebsmechanismus (16) aneinander befestigt.

15. Verfahren zum Zusammenbauen einer Baugruppe (10) nach einem der vorhergehenden Ansprüche mit den folgenden Schritten: Zusammenbauen des Türpaneels (14) und des Fensterhebermechanismus (12) zu einer Unterbaugruppe und anschließend Zusammenbauen des Antriebsmechanismus (16), um die komplette Baugruppe (10) zu bilden.

16. Verfahren zum Zusammenbauen einer Baugruppe (10) nach einem der Ansprüche 1 bis 14, das nacheinander folgende Schritte umfasst: Einsetzen der Positioniereinrichtung (24) in das zweite Loch (12A) oder das dritte Loch (16A), Einsetzen der Positioniereinrichtung (24) in das erste Loch (14A), Einsetzen der Positioniereinrichtung (24) in das andere von dem zweiten Loch (12A) und dem dritten Loch (16A), um die komplette Baugruppe (10) bereitzustellen.

17. Verfahren zum Zusammenbauen einer Baugruppe (10) nach Anspruch 16, bei dem mindestens zwei der Löcher vor dem Einsetzen der Positioniereinrichtung (24) ausgerichtet werden.

## Revendications

1. Un ensemble (10) incluant un panneau de portière (14) ayant un premier orifice (14A), un mécanisme de lève-vitre (12) ayant un deuxième orifice (12A) et un mécanisme d'entraînement (16) ayant un troisième orifice (16A), l'ensemble incluant en outre un moyen de positionnement (24) assemblé dans les premier, deuxième et troisième orifices, **caractérisée en ce que** le moyen de positionnement a au moins une partie cylindrique de faible diamètre (d) qui est concentrique par rapport à une partie cylindrique de diamètre important (D) pour fournir un épaulement (26), le moyen de positionnement incluant en outre une partie de fixation (28, 128) proche de la partie de faible diamètre, pour fixer le mécanisme de lève-vitre par rapport à l'ensemble, et une partie de fixation (30) proche de la partie de diamètre important, pour fixer le mécanisme d'entraînement par rapport à l'ensemble, dans lequel la partie cylindrique de faible diamètre (d) est placée dans le deuxième orifice (12A) pour aligner le moyen de positionnement (24) par rapport au mécanisme de lève-vitre (12), et la partie de diamètre important (D) est placée dans le troisième orifice (16A) pour aligner le moyen de positionnement par rapport au mécanisme d'entraînement, alignant ainsi le mécanisme de lève-vitre (12) par rapport au mécanisme d'entraînement (16), dans lequel le panneau de portière (14) est placé entre le mécanisme de lève-vitre (12) et le mécanisme d'entraînement (16), ainsi qu'entre l'épaulement (26) et le mécanisme de lève-vitre (12).

2. Un ensemble selon la revendication 1, dans lequel au moins une des parties de fixation (28, 30) est sous la forme d'une partie filetée.

3. Un ensemble selon la revendication 2, dans lequel la partie filetée (28) est en prise avec le mécanisme de lève-vitre ou le mécanisme d'entraînement.

4. Un ensemble selon la revendication 2, dans lequel la partie filetée (30) est en prise avec un écrou (32).

5. Un ensemble selon les revendications 2 à 4, dans lequel la partie filetée (30) possède des faces parallèles.

6. Un ensemble selon les revendications 2 à 4, dans lequel la partie filetée (28) est tronconique.

7. Un ensemble selon l'une quelconque des revendications précédentes, dans lequel le moyen de positionnement (24) inclut un organe d'entraînement (31).

8. Un ensemble selon l'une quelconque des revendications précédentes, dans lequel au moins une des parties de fixation (128) est sous la forme d'un rivet.

9. Un ensemble selon l'une quelconque des revendications précédentes, dans lequel le panneau de portière (14) se positionne sur la partie de faible diamètre (d).

10. Un ensemble selon l'une quelconque des revendications précédentes, dans lequel au moins un parmi le deuxième (12A) et le troisième (16A) orifices est un trou débouchant (16A) ou un trou borgne (12A).

11. Un ensemble selon l'une quelconque des revendications précédentes, dans lequel le panneau de portière (14) est scellé par rapport au mécanisme de lève-vitre (12), et/ou le panneau de portière (14) est scellé par rapport au mécanisme d'entraînement (16).

12. Un ensemble selon l'une quelconque des revendications précédentes, dans lequel le mécanisme d'entraînement (16) est un moteur de lève-vitre.

13. Un ensemble selon l'une quelconque des revendications précédentes, dans lequel le panneau de portière (14), le mécanisme de lève-vitre (12) et le mécanisme d'entraînement (16) sont fixés les uns par rapport aux autres.

14. Un ensemble selon la revendication 13, incluant en outre un moyen de positionnement supplémentaire qui, conjointement avec ledit moyen de positionnement (24), fixe le panneau de portière (14), le mécanisme de lève-vitre (12) et le mécanisme d'entraînement (16) les uns par rapport aux autres.

15. Un procédé pour assembler un ensemble (10) selon l'une quelconque des revendications précédentes, incluant les étapes consistant à assembler le panneau de portière (14) et le mécanisme de lève-vitre (12) pour former un sous-ensemble, puis à assembler le mécanisme d'entraînement (16) pour former l'ensemble achevé (10).

16. Un procédé pour assembler un ensemble (10) selon les revendications 1 à 14, incluant les étapes séquentielles consistant à insérer le moyen de positionnement (24) dans l'un parmi le deuxième (12A) ou le troisième (16A) orifices, en insérant le moyen de positionnement (24) dans le premier orifice (14A), et en insérant le moyen de positionnement (24) dans l'autre parmi le deuxième (12A) et le troisième (16A) orifices pour fournir l'ensemble achevé (10).

17. Un procédé pour assembler un ensemble (10) selon la revendication 16, incluant l'étape consistant à pré-aligner au moins deux des orifices avant d'insérer le moyen de positionnement (24).
